# EUROPEAN PATENT SPECIFICATION

(11) **EP 1 195 419 B1**
(45) Date of publication and mention of the grant of the patent: **04.01.2006**
(21) Application number: 01123683.3
(22) Date of filing: 02.10.2001
(51) Int. Cl.: C09J 5/00, C08J 5/12, C08L 77/02

(54) **Joint for nylon resin moldings**
Klebeverbindung für Nylonharzformteile
Joint pour moulages à base de résine de nylon

(30) Priority: 05.10.2000 JP 2000306463
(43) Date of publication of application: 10.04.2002
(60) Divisional application: 03013065.2
(73) Proprietor: Ube Industries, Ltd., Ube-Shi, Yamaguchi 755-8633 (JP); OSAKA GAS CO., LTD., Osaka 541-0046 (JP)
(72) Inventor: Isobe, Noriyuki, Ube-shi, Yamaguchi 755-8633 (JP); Fujimura, Hideki, Ube-shi, Yamaguchi 755-8633 (JP); Matsuda, Shinya, Ube-shi, Yamaguchi 755-8633 (JP); Higuchi, Yuji, Chuo-ku, Osaka-shi, Osaka 541-0046 (JP)
(74) Representative: Grünecker, Kinkeldey, Stockmair & Schwanhäusser Anwaltssozietät

(56) References cited:
- WO-A-90/05756
- US-A- 5 414 051
- DATABASE WPI Section Ch, Week 198640 Derwent Publications Ltd., London, GB; Class A23, AN 1986-261016 XP002197166 & JP 61 188458 A (ASAHI CHEM IND CO LTD), 22 August 1986 (1986-08-22)
- KOHAN M.I.: 'NYLON PLASTIC HANDBOOK', CARL HANSER VERLAG CHAPTERS 1.2 AND 11.3

## Description

The present invention relates to the use of specific nylon materials as joint which can provide sufficient adhesion strength when adhered to nylon resin moldings.

### BACKGROUND OF THE INVENTION

Solvent adhesives are used for adhering nylon resin moldings to each other. Solvents for used in these solvent adhesives are required to dissolve nylon to be adhered. As solvents for the solvent adhesives adapted for nylons, phenolic compounds such as phenol, cresol and chlorophenol or fluoroalcohols are currently used, but all of these are so poisonous or stimulous that they are not preferred from the point of working environment.

Thus, in order to reduce toxicity of the phenolic compounds, those compounds have been used which have a phenolic hydroxyl group and one or more alkyl groups. Of these, a combination of carvacrol (2-methyl-5-isopropylphenol) and thymol (5-methyl-2-isopropylphenol) has a comparatively low toxicity and can remain liquid down to a temperature as low as -20°C depending upon composition ratio, thus being usable over a wide range of temperature. A solvent adhesive obtained by dissolving nylon in this mixed solvent of carvacrol and thymol is described in Japanese Patent No. 2909203, and is used for adhering a nylon gas pipe to a nylon joint.

However, in cases where an enough peel strength is required at adhesion portions between the pipe and the joint or in other uses, the current adhesion strength is not enough, and use of the adhesives has been limited. WO 90/05756 discloses an adhesive comprising specific nylon materials. JP-A-61-188458 and US-A-5, 414, 051 disclose polyamide compositions.

### SUMMARY OF THE INVENTION

An object of the present invention is to provide a joint for nylon resin moldings, which can provide an enough peel strength when adhered to nylon resin moldings using a solvent adhesive.

Mechanism of adhesion with a solvent adhesive is that, first, materials to be adhered are dissolved in the solvent adhesive at the adhesion portion, and the dissolved polymer molecule chains then mutually invade into the materials to be adhered, and the solvent evaporates or is absorbed by the materials to be adhered to form a dry, solidified adhesion layer at the adhesion interface. Therefore, solvents for the solvent adhesive are required to sufficiently dissolve materials to be adhered.

The present invention is based on the finding that, by the use of a copolymerized nylon or a composition comprising a copolymerized nylon or a copolymerized nylon blend and at least one of a nucleating agent and a lubricant as a material for a joint to be adhered to nylon resin moldings, solubility of nylon resin in the solvent contained in the solvent adhesive is enhanced to thereby form the adhesion layer more effectively at the adhesion interface, thus adhesion strength being improved and moldability being improved through shortening cooling time upon injection molding.

That is, the invention relates to the use as defined in claim 1 and the method as defined in claim 11. Prefered embodiments are defined in the subclaims.

### BRIEF DESCRIPTION OF THE DRAWINGS

Fig. 1 is a sectional view showing a joint for nylon pipes manufactured by insert molding.
Fig. 2 is a sectional view showing a joint for nylon pipes manufactured by sandwitch molding.

### DETAILED DESCRIPTION OF THE INVENTION

The invention is described in detail below.

The copolymerized nylon to be used as a material for the joint of the invention is a copolymerized nylon comprising two kinds or more units derived from aminocarboxylic acids, lactams or a combination of diamine and dicarboxylic acid. Specifically, there are illustrated those which comprise two or more units derived from lactams containing 6 to 12 carbon atoms, aminocarboxylic acids containing 6 to 12 carbon atoms or a combination of a dicarboxylic acid containing 3 to 22 carbon atoms and a diamine containing 2 to 20 carbon atoms.

As the aminocarboxylic acid containing 6 to 12 carbon atoms, there may be used 6-aminocaproic acid, 7-aminoheptanoic acid, 8-aminooctanoic acid, 9-aminononanoic acid, 10-aminocapric acid, 11-aminoundecanoic acid, 12-aminododecanoic acid.

As the lactam containing 6 to 12 carbon atoms, there may be used ε-caprolactam, ω-enantolactam, ω-undecanelactam, ω-dodecalactam.

As the diamine and dicarboxylic acid, linear diamines and linear dicarboxylic acids are used but, for the purpose of decreasing crystallinity, there may be used copolymerized nylons wherein part of starting materials of nylons derived from the linear diamine and the linear dicarboxylic acid may be replaced by a branched diamine and/or a branched dicarboxylic acid.

As the linear aliphatic dicarboxylic acid, there may be used malonic acid, succinic acid, glutaric acid, adipic acid, pimelic acid, suberic acid, azelaic acid, sebacic acid, undecane dicarboxylic acid, dodecane dicarboxylic acid, tridecane dicarboxylic acid, tetradecane dicarboxylic acid, pentadecane dicarboxylic acid, hexadecane dicarboxylic acid, heptadecane dicarboxylic acid, octadecane dicarboxylic acid, nonadecane dicarboxylic acid, eicosane dicarboxylic acid.

As the linear aliphatic diamine, there may be used ethylenediamine, 1,3-propanediamine, 1,4-butanediamine, 1,5-pentanediamine, 1,6-hexanediamine, 1,7-heptanecliamine, 1,8-octanediamine, 1,9-nonanediamine, 1,10-decanediamine, 1,11-undecanediamine, 1,12-dodecane-diamine, 1,13-tridecanediamine, 1,14-tetradecanediamine, 1,15-pentadecanediamine, 1,16-hexadecanediamine, 1,17-heptadecanediamine, 1,18-octadecanediamine, 1,19-nonadecanediamine, 1,20-eicosanediamine.

As the branched aliphatic diamine, there may be used 1-butyl-1,2-ethanediamine, 1,1-dimethyl-1,4-butanediamine, 1-ethyl-1,4-butanediamine, 1,2-dimethyl-1,4-butanediamine, 1,3-dimethyl-1,4-butanediamine, 1,4-dimethyl-1,4-butanediamine, 2,3-dimethyl-1,4-butanediamine, 2-methyl-1,5-pentanecliamine, 3-methyl-1,5-pentanediamine, 2,2-dimethyl-1,6-hexanediamine, 2,5-dimethyl-1,6-hexanediamine, 2,4-dimethyl-1,6-hexanediamine, 3,3-dimethyl-1,6-hexanediamine, 2,2,4-trimethyl-1,6-hexanediamine, 2,4,4-trimethyl-1,6-hexanediamine, 2,4-diethyl-1,6-hexanediamine, 2,2-dimethyl-1,7-heptanediamine, 2,3-dimethyl-1,7-heptanediamine, 2,4-dimethyl-1,7-heptanediamine, 2,5-dimethyl-1,7-peptanediamine, 2-methyl-1,8-octanediamine, 3-methyl-1,8-octanediamine, 4-methyl-1,8-octanediamine, 1,3-dimethyl-1,8-octanediamine, 1,4-dimethyl-1,8-octanediamine, 2,4-dimethyl-1,8-octanediamine, 3,4-dimethyl-1,8-octanediamine, 4,5-dimethyl-1,8-octanediamine, 2,2-dimethyl-1,8-octanediamine, 3,3-dimethyl-1,8-octanediamine, 4,4-dimethyl-1,8-octanediamine, 5-methyl-1,9-nonanediamine.

As the branched dicarboxylic acid, there may be used dimethylmalonic acid, 3,3-diethylsuccinic acid, 2,2-dimethylglutaric acid, 2-methyladipic acid, 3-methyladipic acid, trimethyladipic acid, 2-butylsuberic acid (also named 1,6-decane dicarboxylic acid), 2,3-dibutylbutane dioic acid, 8-ethyloctadecane dioic acid, 8,13-dimethyleicosadioic acid, 2-octylundecane dioic acid, 2-nonyldecane dioic acid,

As the copolymerized nylon to be used in the invention as a material for the joint, there may be used a binary copolymerized nylon comprising two components derived from the above-described starting materials or a copolymerized nylon comprising three or more components derived from the above-described starting materials.

The nylon to be used as a material for the joint, the copolymerized nylon may independently be used, or may be used as a blend of the copolymerized nylon and a homonylon or a blend of the copolymerized nylon and other copolymerized nylon. As the copolymerized nylon blend, there are illustrated, for example, a blend of the copolymerized nylon and a nylon selected from the group consisting of nylon 6, nylon 11, nylon 12, nylon 6,6, nylon 6,10 and nylon 6,12. The term "nylon 6,6" as used herein means a homonylon obtained by polymerizing a diamine containing 6 carbon atoms with a dicarboxylic acid containing 6 carbon atoms.

As specific examples of the nylon resins to be adhered to the joint of the invention, there are illustrated aliphatic polyamides such as nylon 6, nylon 6,6, nylon 11 and nylon 12 and semi-aromatic polyamide resins such as polyhexamethylene terephthalamide and polyhexamethylene isophthalamide. These resins may comprise a single copolymer or a mixture of two or more copolymers.

As the nucleating agent to be used in the material for the joint of the invention, there may be used inorganic nucleating agents such as talc, wollastnite, calcium carbonate, kaolin, calcined kaolin, silica, zeolite, boron nitride, alumina, magnesia, graphite and mica, and organic nucleating agents such as oxalates, stearates, benzoates, salicylates, tartrates, sulfonates, montan wax salts, montan wax esters, terephthalates, benzoates and carboxylates. Of these, talc is preferably used. The nucleating agent is preferably compounded in an amount ranging from 0.1 to 5 parts by weight per 100 parts by weight of the resin component.

As the lubricant to be used in the material for the joint of the invention, there are illustrated those which are commonly used in nylons, such as fatty acids, metallic soaps derived from fatty acids, aliphatic alcohols, hydroxyfatty acids, fatty acid amides. The lubricant is preferably contained in an amount ranging from 0.05 to 5 parts by weight per 100 parts by weight of the resin component.

As the fatty acid, there may be used capric acid, n-undecylenic acid, lauric acid, n-tridecylenic acid, myristic acid, n-pentadecylenic acid, palmitic acid, margaric acid, stearic acid, n-nonadecylenic acid, arachidonic acid, n-heneiconic acid, behenic acid, n-tricosanoic acid, lignoceric acid, n-pentacosanoic acid, cerotic acid, n-heptacosanoic acid, montanic acid, n-nonacosanoic acid, melissic acid, n-hentriacontanoic acid, n-dotriacontanoic acid, n-tetratriacontanoic acid, ceroplastic acid, n-hexatriacontanoic acid, n-octatriacontanoic acid, n-hexatetracontanoic acid, oleic acid, erucic acid, hydroxystearic acid, ricinoleic acid.

As the aliphatic alcohol, there may be used octanol, nonanol, decanol, undecanol, dodecanol, tridecanol, myristyl alcohol, pentadecanol, cetyl aocohol, heptadecanol, stearyl alcohol, nonadecanol, aralkyl alcohol, behenyl alcohol, carnaubyl alcohol, ceryl alcohol, octacosanol, melissyl alcohol, dotriacontanol, pentaerythritol,

As the metallic soap, there may be used calcium salts, zinc salts and lithium salts derived from capric acid, n-undecylenic acid, lauric acid, n-tridecylenic acid, myristic acid, n-pentadecylenic acid, palmitic acid, stearic acid, behenic acis, montanic acid, oleic acid, erucic acid, hydroxystearic acid and ricinoleic acid.

As the fatty acid amide, there may be used caproic acid amide, caprylic acid amide, capric acid amide, lauric acid amide, myristic acid amide, palmitic acid amide, stearic acid amide, arachidic acid amide, behenic acid amide, palmitoleic acid amide, oleic acid amide, eicosenoic acid amide, erucic acid amide, elaidic acid amide, trans-11-eicosenoic acid amide, trans-13-docosenoic acid amide, linoleic acid amide, linolenic acid amide, ricinoleic acid amide, N,N'-methylenebiscaproic acid amide, N,N'-methylenebiscaprylic acid amide, N,N'-methylenebiscapric acid amide, N,N'-methylenebislauric acid amide, N,N'-methylenebismyristic acid amide, N,N'-methylenebispalmitic acid amide, N,N'-methylenebisstearic acid amide, N,N'-methylenebisbehenic acid amide, N,N'-methylenebisoleic acid amide, N,N'-methylenebiseicosenoic acid amide, N,N'-methylenebiserucic acid amide, N,N'-methylenebiselaidic acid amide, N,N'-methylenebiserucic acid amide, N,N'-ethylenebiscaproic acid amide, N,N'-ethylenebiscaprylic acid amide, N,N'-ethylenebiscapric acid amide, N,N'-ethylenebislauric acid amide, N,N'-ethylenebismyristic acid amide, N,N'-ethylenebispalmitic acid amide, N,N'-ethylenebisstearic acid amide, N,N'-ethylenebisbehenic acid amide, N,N'-ethylenebisoleic acid amide, N,N'-ethylenebiseicosenoic acid amide, N,N'-ethylenebiserucic acid amide, N,N'-ethylenebiselaidic acid amide, N,N'-ethylenebiserucic acid amide.

The joint used in accordance with the invention may be totally constituted by the aforesaid material for the joint, or may partly be constituted by the aforesaid material at the portion to be in contact with materials to be adhered.

As molding methods using the joint material at least at the adhesion portion, a dissimilar material molding using different materials such as insert molding or sandwitch molding may be used.

For example, there may be employed a dissimilar material molding using different materials, such as an insert molding wherein a primary member resin is first molded, and the resulting molding is inserted into a metal mold for a secondary member resin, followed by casting a secondary member resin into necessary portion of the mold to heat-fuse with the primary member resin or a sandwitch molding method wherein a primary member resin is injected into a metal mold, then a secondary member resin is injected so that the primary material resin forms a surface layer (skin layer) and the secondary member resin forms an inner layer (core layer).

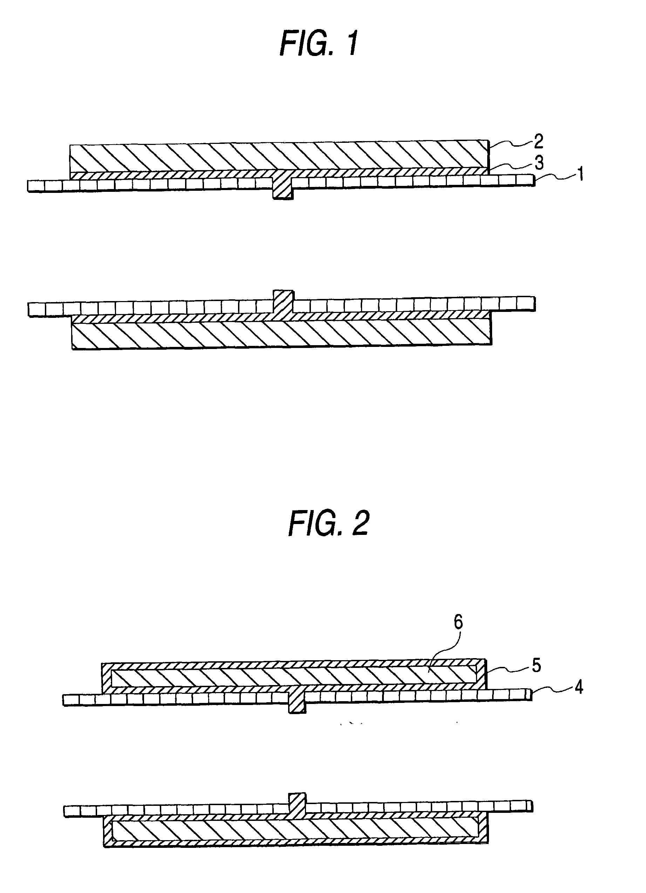

Fig. 1 is a sectional view of a socket for pipe manufactured by the insert molding method. A joint for joining nylon pipes 1 comprises an outer layer 2 and an inner layer 3. Peel strength at the surface adhered to the nylon pipe can effectively be improved by using the aforesaid joint material as the inner layer 3.

Fig. 2 is a sectional view showing a socket for a pipe manufactured by the sandwitch molding method. A joint for joining nylon pipes 4 comprises an outer layer (skin layer) 5 and an inner layer (core layer) 6. Peel strength at the surface adhered to the nylon pipe 4 can effectively be improved by using the aforesaid joint material as the outer layer (skin layer).

To the copolymerized nylons to be used as a material for the joint employed in accordance with the invention may optionally be added additives such as a heat resistance-imparting agent, a weather resistance-imparting agent, an antioxidant, a UV absorbent, a fire retardant, an impact resistance-imparting agent, an antistatic agent, a plasticizer.

In addition, to the copolymerized nylons to be used as a material for the joint employed in the invention may be added, if necessary, reinforcing materials such as glass fibers, inorganic fibers, organic fibers, carbon black,

To the copolymerized nylons to be used as a material for the joint employed in the invention may optionally be added colorants such as pigments or dyes.

A solvent adhesive is used for adhering the joint used in accordance with the invention to nylon resin moldings. As the solvent adhesive, those adhesives may be used which comprise a solvent capable of dissolving nylon resin moldings and the joint, such as a phenolic compound (e.g., phenol, alkylphenol) or a fluoroalcoholic compound.

As the phenolic compounds, there are illustrated phenol, o-cresol, m-cresol, p-cresol, o-ethylphenol, methylphenol, p-ethylphenol, o-propylphenol, m-propylphenol, o-isopropylphenol, m-isopropylphenol, p-isopropylphenol, o-n-butylphenol, m-n-butylphenol, p-n-butylphenol, o-sec-butylphenol, m-sec-butylphenol, p-sec-butylphenol, o-tert-butylphenol, m-tert-butylphenol, p-tert-butylphenol, 4-amylphenol, 4-octylphenol, 4-tert-octylphenol, 4-nonylphenol, 4-dodecylphenol, 2,3-dimethylphenol, 2,4-dimethylphenol, 2,5-dimethylphenol, 2,6-dimethylphenol, 3,4-dimethylphenol, 3,5-dimethylphenol, 4-isopropyl-3-methylphenol, 5-isopropyl-2-methylphenol (also called carvacrol), 6-isopropyl-3-methylphenol (also called thymol), 2-tert-butyl-4-methylphenol, 6-tert-butyl-3-methylphenol, 6-tert-butyl-2-methylphenol, 6-tert-butyl-2,4-dimethylphenol, 4,6-tert-butyl-3-methylphenol, resorcinol, 2-methylresorcinol, 4-methylresorcinol, 5-methylresorcinol, 2-ethylresorcinol, 4-ethylresorcinol, 5-ethylresorcinol, 2-butylresorcinol, 4-butylresorcinol, 5-butylresorcinol, 2-amylresorcinol, 4-amylresorcinol, 5-amylresorcinol, 2-hexylresorcinol, 4-hexylresorcinol, 5-hexylresorcinol, 2-heptylresorcinol, 4-heptylresorcinol, 5-heptylresorcinol, 2-octylresorcinol, 4-octylresorcinol, 5-octylresorcinol, 2-nonylresorcinol, 4-nonylresorcinol, 5-nonylresorcinol, 2-dodecylresorcinol, 4-dodecylresorcinol, 5-dodecylresorcinol, catechol, 3-methylcatechol, 4-methylcatechol, hydroquinone, 1,2,3-trihydroxybenzene (also called pyrogallol) and 1,3,5-trihydroxybenzene (also called phloroglucinol).

As the fluoroalcoholic compounds, there are illustrated 1,1,1,3,3,3-hexafluoroisopropanol, and 1,1,1-trifluoroethanol.

Of these, a combination of carvacrol (2-methyl-5-isopropylphenol) and thymol (5-methyl-2-isopropylphenol) is preferred, because it shows a comparatively low toxicity and can remain liquid to below -20°C depending upon the composition ratio, thus permitting to use over a wide range of temperature.

In the invention, a solvent adhesive containing a copolymerized nylon is preferred as the solvent adhesive. Incorporation of the copolymerized nylon enables formation of an adhesive layer at the adhesion interface with more effectivity, thus adhesion strength being improved.

As the copolymerized nylon, there may be used those copolymerized nylons which comprise two kinds or more units derived from a lactam containing 6 to 12 carbon atoms, an aminocarboxylic acid containing 6 to 12 carbon atoms, or a combination of a dicarboxylic acid containing 3 to 22 carbon atoms and a diamine containing 2 to 20 carbon atoms.

Concentration of the copolymerized nylon contained in the adhesive is preferably 0.5 to 20% by weight based on the total weight of the adhesive. In case where concentration of the copolymerized nylon is less than 0.5% by weight, viscosity of the resulting adhesive becomes too low that it tends to run upon application, thus being difficult to handle. On the other hand, in case where concentration of the copolymerized nylon becomes more than 20% by weight, viscosity becomes so high that it becomes difficult to handle and that it takes long before solidification.

In addition, in the invention, the adhesion structure of nylon resin wherein the aforesaid joint material and the material comprising other nylon resin are adhered to each other using the solvent adhesive can be applied to various nylon resin products. For example, it can be applied to joining of hollow moldings or adhesion for producing multi-layer film.

## Claims

1. Use of a material comprising a copolymerized nylon as a joint to be adhered to nylon resin moldings for joining nylon resin moldings using a solvent adhesive.

2. The use according to claim 1 in which the material for the joint comprises further at least one of a nucleating agent and a lubricant.

3. The use according to claim 2 wherein the copolymerized nylon comprises a copolymerized nylon blend.

4. The use as claimed in one of claims 1 to 3, wherein the copolymerized nylon comprises two or more kinds of units derived from lactams containing 6 to 12 carbon atoms, aminocarboxylic acids containing 6 to 12 carbon atoms, and a combination of a dicarboxylic acid containing 3 to 22 carbon atoms and a diamine containing 2 to 20 carbon atoms.

5. The use as claimed in claim 3, wherein the copolymerized nylon blend is a blend of a copolymerized nylon and a nylon selected from the group consisting of nylon 6, nylon 11, nylon 12, nylon 6,6, nylon 6,10 and nylon 6,12.

6. The use as claimed in claim 2 or 3, wherein the nucleating agent is talc, with its content being 0.1 to 5 parts by weight per 100 parts by weight of the resin component.

7. The use as claimed in claim 2 or 3, wherein the lubricant is a metal soap, with its content being 0.05 to 5 parts by weight per 100 parts by weight of the resin component.

8. The use as claimed in one of claims 1 to 3, wherein the copolymerized nylon comprises 5 to 95% by weight of nylon-12 component, based on the total weight of the copolymerized nylon.

9. The use as claimed in claim 3, wherein the copolymerized nylon blend comprises 50 to 90% by weight of the copolymerized nylon and 50 to 10% by weight of nylon 12, based on the total weight of the copolymerized nylon blend.

10. The use as claimed in one of claims 1 to 3, wherein the joint has an insert molding structure or a sandwich molding structure.

11. A method for adhering nylon resin moldings, which comprises adhering the nylon resin moldings to a joint comprising (i) a copolymerized nylon or (ii) a composition comprising a copolymerized nylon or a copolymerized nylon blend and at least one of a nucleating agent and a lubricant using a solvent adhesive.

12. The method for adhering nylon resin moldings as claimed in claim 11, wherein the solvent adhesive comprises at least one component of a phenolic compound and a fluoroalcoholic compound.

13. The method for adhering nylon resin moldings as claimed in claim 11 or 12, wherein the solvent adhesive comprises a copolymerized nylon.

## Patentansprüche

1. Verwendung eines Materials, das ein copolymerisiertes Nylon umfasst, als eine Verbindung zum Verkleben von Nylonharzformteilen zur Verbindung von Nylonharzformteilen unter Verwendung eines Lösungsmittelklebers.

2. Die Verwendung gemäß Anspruch 1, in der das Material für die Verbindung zusätzlich wenigstens ein Nukleationsmittel und ein Gleitmittel umfasst.

3. Die Verwendung gemäß Anspruch 2, worin das copolymerisierte Nylon eine copolymerisierte Nylonmischung umfasst.

4. Die Verwendung, wie sie in einem der Ansprüche 1 - 3 beansprucht wird, worin das copolymerisierte Nylon zwei oder mehr Arten von Einheiten umfasst, die aus Lactamen, die 6 - 12 Kohlenstoffatome enthalten, Aminocarbonsäuren, die 6 - 12 Kohlenstoffatome enthalten, und einer Kombination aus einer Dicarbonsäure, die 3 - 22 Kohlenstoffatome enthält, und einem Diamin, das 2 - 20 Kohlenstoffatome enthält, abgeleitet sind.

5. Die Verwendung, wie sie in Anspruch 3 beansprucht wird, worin die copolymerisierte Nylonmischung eine Mischung aus einem copolymerisierten Nylon und einem Nylon ist, das aus der Gruppe ausgewählt ist, die aus Nylon 6, Nylon 11, Nylon 12, Nylon 6,6, Nylon 6,10 und Nylon 6,12 besteht.

6. Die Verwendung, wie sie in Anspruch 2 oder 3 beansprucht wird, worin das Nukleationsmittel Talkum ist, wobei sein Gehalt 0,1 - 5 Gewichtsanteile pro 100 Gewichtsanteile der Harzkomponente ausmacht.

7. Die Verwendung, wie sie in Anspruch 2 oder 3 beansprucht wird, worin das Gleitmittel eine Metallseife mit einem Gehalt von 0,05 - 5 Gewichtsanteilen pro 100 Gewichtsanteile der Harzkomponente ist.

8. Die Verwendung, wie sie in einem der Ansprüche 1 - 3 beansprucht wird, worin das copolymerisierte Nylon basierend auf dem Gesamtgewicht des copolymerisierten Nylons 5 - 95 Gewichtsprozent einer Nyton-12-Komponente umfasst.

9. Die Verwendung, wie sie in Anspruch 3 beansprucht wird, worin die copolymerisierte Nylonmischung basierend auf dem Gesamtgewicht der copolymerisierten Nylonmischung 50 - 90 Gewichtsprozent des copolymerisierten Nylons und 50 - 10 Gewichtsprozent Nylon 12 umfasst.

10. Die Verwendung, wie sie in einem der Ansprüche 1 - 3 beansprucht wird, worin die Verbindung eine Einsatzformteilstruktur oder eine Sandwich-Formteilstruktur aufweist.

11. Ein Verfahren zum Verkleben von Nylonharzformteilen, das das Verkleben der Nylonharzformteile unter Verwendung eines Lösungsmittelklebers an eine Verbindung umfasst, die (i) ein copolymerisiertes Nylon oder (ii) eine Zusammensetzung, die ein copolymerisiertes Nylon oder eine copolymerisierte Nylonmischung umfasst, und wenigstens ein Nukleationsmittel und ein Gleitmittel umfasst.

12. Das Verfahren zum Verkleben von Nylonharzformteilen, wie es in Anspruch 11 beansprucht wird, worin der Lösungsmittelkleber wenigstens eine Komponente einer phenolischen Verbindung und einer Fluor-alkoholischen Verbindung umfasst.

13. Das Verfahren zum Verkleben von Nylonharzformteilen, wie es in Anspruch 11 oder 12 beansprucht wird, worin der Lösungsmittelkleber ein copolymerisiertes Nylon umfasst.

## Revendications

1. Utilisation d'un matériau comprenant un nylon copolymérisé en tant que joint destiné à adhérer à des moulages en résine de nylon pour joindre des moulages en résine de nylon par utilisation d'un adhésif à solvant.

2. Utilisation selon la revendication 1, dans laquelle le matériau pour le joint comprend en outre au moins l'un parmi un agent de nucléation et un lubrifiant.

3. Utilisation selon la revendication 2, dans laquelle le nylon copolymérisé comprend un mélange de nylons copolymérisés.

4. Utilisation selon l'une quelconque des revendications 1 à 3, dans laquelle le nylon copolymérisé comprend deux types ou plus de motifs dérivant de lactames contenant de 6 à 12 atomes de carbone, d'acides aminocarboxyliques contenant de 6 à 12 atomes de carbone, et d'une combinaison d'un acide dicarboxylique contenant de 3 à 22 atomes de carbone et d'une diamine contenant de 2 à 20 atomes de carbone.

5. Utilisation selon la revendication 3, dans laquelle le mélange de nylons copolymérisés est un mélange d'un nylon copolymérisé et d'un nylon choisi dans le groupe constitué par le nylon 6, le nylon 11, le nylon 12, le nylon 6,6, le nylon 6,10 et le nylon 6,12.

6. Utilisation selon la revendication 2 ou 3, dans laquelle l'agent de nucléation est le talc, dont la teneur est de 0,1 à 5 parties en poids pour 100 parties en poids du composant résine.

7. Utilisation selon la revendication 2 ou 3, dans laquelle le lubrifiant est un savon métallique, sa teneur étant de 0,05 à 5 parties en poids pour 100 parties en poids du composant résine.

8. Utilisation selon l'une quelconque des revendications 1 à 3, dans laquelle le nylon copolymérisé comprend 5 à 95 % en poids de composant nylon-12, sur la base du poids total du nylon copolymérisé.

9. Utilisation selon la revendication 3, dans laquelle le mélange de nylons copolymérisés comprend 50 à 90 % en poids du nylon copolymérisé et 50 à 10 % en poids de nylon 12, sur la base du poids total du mélange de nylons copolymérisés.

10. Utilisation selon l'une quelconque des revendications 1 à 3, dans laquelle le joint a une structure de moulage en insert ou une structure de moulage en sandwich.

11. Procédé pour faire adhérer des moulages en résine de nylon, qui comprend une étape consistant à faire adhérer les moulages en résine de nylon à un joint comprenant (i) un nylon copolymérisé ou (ii) une composition comprenant un nylon copolymérisé ou un mélange de nylons copolymérisés et au moins l'un parmi un agent de nucléation et un lubrifiant utilisant un adhésif à solvant.

12. Procédé pour faire adhérer des moulages en résine de nylon selon la revendication 11, dans lequel l'adhésif à solvant comprend au moins un composant parmi un composé phénolique et un composé alcoolique fluoré.

13. Procédé pour faire adhérer des moulages en résine de nylon selon la revendication 11 ou 12, dans lequel l'adhésif à solvant comprend un nylon copolymérisé.
